# EUROPÄISCHE PATENTSCHRIFT

(11) **EP 0 850 974 B1**
(45) Veröffentlichungstag und Bekanntmachung des Hinweises auf die Patenterteilung: **01.03.2000**
(21) Anmeldenummer: 97122686.5
(22) Anmeldetag: 22.12.1997
(51) Int. Cl.: C08G 69/08, C08G 69/14, C08G 69/36

(54) **H-förmige Polyamide**
H-shaped branched polyamides
Polymides ramifiés en forme de H

(30) Priorität: 23.12.1996 DE 19654179
(43) Veröffentlichungstag der Anmeldung: 01.07.1998
(73) Patentinhaber: BASF AKTIENGESELLSCHAFT, 67056 Ludwigshafen (DE)
(72) Erfinder: Glück, Alexander, Dr., 67251 Freinsheim (DE); Götz, Walter, Dr., 67067 Ludwigshafen (DE); Grutke, Stefan, Dr., 67434 Neustadt (DE); Laun, Martin, Dr., 67061 Ludwigshafen (DE); Warzelhan, Volker, Dr., 67273 Weisenheim (DE)
(74) Vertreter: Isenbruck, Günter, Dr.

(56) Entgegenhaltungen:
- EP-A- 0 345 648
- DE-A- 2 233 768
- US-A- 3 687 904

## Beschreibung

Die Erfindung betrifft H-förmige Polyamide, Verfahren zu ihrer Herstellung, ihre Verwendung sowie Formmassen und Formkörper daraus. H-förmige Strukturen werden von Polymeren ausgebildet, die mehr als einen Verzweigungspunkt in der Polymerkette aufweisen. Insbesondere bei zwei an unterschiedlichen Stellen des Polymermoleküls vorliegenden Verzweigungspunkten werden H-förmige Strukturen ausgebildet. Die Strukturen unterscheiden sich somit von den Strukturen sternförmiger Polymere, bei denen alle Verzweigungen von einem Punkt ausgehen.

Bei der Verarbeitung von Spritzguß- und Faserprodukten aus Polyamiden ist neben der Kristallisationszeit und der Maschinenzeit die Fließfähigkeit der verwendeten Polyamide unter Scherung maßgebend für die Verarbeitungszeit bzw. Zykluszeit von Verarbeitungsmaschinen. Durch eine Verbesserung der Fließfähigkeit, die durch eine Verminderung des Molekulargewichts und damit der Schmelzviskosität erreicht werden kann, werden allerdings die mechanischen Eigenschaften oft unzureichend. Daher ist es erwünscht, die Fließfähigkeit der verwendeten Polyamide zu verbessern, ohne daß dabei Einbußen bei den mechanischen Eigenschaften der Formkörper auftreten. Bei der Verarbeitung der Polyamide sollte zudem keine weitere Steigerung der Viskosität zu beobachten sein, d.h. die Polyamide sollten schmelzestabil sein. Eine Reihe von Polyamiden, die die vorstehenden Anforderungen erfüllen sollen, und Verfahren zu ihrer Herstellung sind bekannt.

Aus JP-A-50-2791 sind Polyamide bekannt, die aus ε-Caprolactam, Trimesinsäure und Hexamethylendiamin aufgebaut sind. Trimesinsäure als trifunktionelle Säure und Hexamethylendiamin als difunktionelles Amin dienen dabei der Ausbildung von Verzweigungsstrukturen. Zur Herstellung des Polymers werden keine monofunktionellen Verbindungen eingesetzt.

Aus der DE-A-2 233 768 ist ein Verfahren zur Herstellung von basisch modifizierten Polyamiden bekannt, bei dem neben ε-Caprolactam und ε-Aminocapronsäure Diethylentriamin, Adipinsäure und Benzoesäure zur Ausbildung von Verzweigungsstrukturen im Polymer eingesetzt werden. Es werden mindestens 45 µmol/g Polymer an Diethylentriamin eingesetzt. Das Verhältnis von Adipinsäure zu Benzoesäure ist so gewählt, daß das Äquivalentverhältnis von Dicarbonsäure zu Monocarbonsäure mindestens 4:1 beträgt.

EP-A-0 345 648 betrifft thermoplastisch verarbeitbare Polyamide. Die Polyamide werden aus ε-Caprolactam oder einer Aminocarbonsäure hergestellt, wobei überwiegend ein Gemisch aus Trimesinsäure und Nitrilotriethanamin neben Diaminen und Monoaminen eingesetzt wird. In einer Ausführungsform werden 60 µmol/g Polymer Trimesinsäure, 30 µmol/g Polymer Hexamethylendiamin und 120 µmol/g Polymer 3-Amino-1-cyclohexylaminopropan eingesetzt.

Die vorstehend beschriebenen Polymere weisen immer noch eine unzureichende Schmelzviskosität auf, so daß die Fließfähigkeit unter Scherung für viele Anwendungen zu gering ist. Zudem weisen sie teilweise unzureichende mechanische Eigenschaften auf.

Aufgabe der vorliegenden Erfindung ist es, Polyamide mit verbesserter Fließfähigkeit und sehr guten mechanischen Eigenschaften bereitzustellen, die die Nachteile der bekannten Polyamide vermeiden. Ebenso soll ein Verfahren zur Herstellung dieser Polyamide bereitgestellt werden.

Gelöst wird die Aufgabe durch Polyamide aus Lactamen, Aminocarbonsäuren oder deren Gemischen als Grundbausteine (a),
1 bis 50 µmol/g Polyamid an mindestens trifunktionellen Aminen oder Carbonsäuren als Grundbausteine (b),
difunktionellen Carbonsäuren oder Aminen als Grundbausteine (c) und
monofunktionellen Carbonsäuren oder Aminen als Grundbausteine (d),
wobei (c) und (d) Carbonsäuren sind, wenn (b) Amine sind und (c) und (d) Amine sind, wenn (b) Carbonsäuren sind,
das Äquivalentverhältnis der funktionellen Gruppen von (b) zu den funktionellen Gruppen von (c) und (d) zusammen 60:40 bis 40:60 beträgt und
das Äquivalentverhältnis der funktionellen Gruppen von (c) zu den funktionellen Gruppen (d) 15:85 bis 60:40 beträgt.

Erfindungsgemäß wurde gefunden, daß Polyamide mit H-förmigen Strukturen das gewünschte Eigenschaftsprofil aufweisen. Sie zeigen eine sehr gute Fließfähigkeit unter Scherung und eine hohe mechanische Festigkeit. Sie sind schmelzestabil, d.h. die Viskosität der Schmelze der Polyamide steigt nicht während der Verarbeitung an.

Polyamide mit H-förmigen Strukturen, d.h. mit mehr als 1 Verzweigungspunkt im Molekül, werden aus den vorstehend aufgeführten Monomeren erhalten. Die erfindungsgemäßen Polyamide können dabei erhalten werden durch Umsetzung der Grundbausteine (a), (b), (c) und (d) bei einer Temperatur von 250 bis 300°C und einem Druck von 1 bis 40 bar in Gegenwart von Wasserdampf.

Nachstehend werden bevorzugte Ausführungsformen der Erfindung erläutert.

Die erfindungsgemäßen Polyamide sind aufgebaut aus Grundbausteinen (a), die mit mindestens tri-, sowie di- und monofunktionellen Aminen oder Carbonsäuren gemischt sind. Geeignete Grundbausteine (a) sind Lactame, Aminocarbonsäuren oder deren Gemische. Beispiele sind Lactame und Aminosäuren mit 4 bis 20 C-Atomen, vorzugsweise 4 bis 12 C-Atomen. Lactame mit 5 C-Atomen werden ausgenommen. Beispiele sind ε-Caprolactam, Önanthlactam, Laurinlactam, Dodecalactam, wie auch die entsprechenden Aminosäuren, und Aminoundecansäure und p-Aminomethylbenzoesäure.

Als Grundbausteine (b) werden mindestens trifunktionelle Amine oder Carbonsäuren verwendet. Beispiele geeigneter mindestens trifunktioneller Amine oder Carbonsäuren sind beschrieben in der EP-A-0 345 648. Die mindestens trifunktionellen Amine weisen mindestens drei Aminogruppen auf, die zur Umsetzung mit Carbonsäuregruppen fähig sind. Sie weisen vorzugsweise keine Carbonsäuregruppen auf. Die mindestens trifunktionellen Carbonsäuren weisen mindestens drei zur Umsetzung mit Aminen befähigte Carbonsäuregruppen auf, die beispielsweise auch in Form ihrer Derivate, wie Ester, vorliegen können. Die Carbonsäuren weisen vorzugsweise keine zur Reaktion mit Carbonsäuregruppen befähigten Aminogruppen auf. Vorzugsweise sind die Grundbausteine (b) in einer Schmelze der Grundbausteine (a) löslich. Sie können auch durch Salzbildung mit den Grundbausteinen (c) und/oder (d) in Lösung gebracht werden. Beispiele geeigneter Carbonsäuren (b) sind Trimesinsäure, trimerisierte Fettsäuren, die beispielsweise aus Ölsäure hergestellt sein können und 50 bis 60 C-Atome aufweisen können, Naphthalinpolycarbonsäuren, wie Naphthalin-1,3,5,7-tetracarbonsäure. Vorzugsweise sind die Carbonsäuren (b) definierte organische Verbindungen und keine polymeren Verbindungen.

Amine mit mindestens 3 Aminogruppen sind beispielsweise Nitrilotrialkylamin, insbesondere Nitrilotriethanamin, Dialkylentriamine, insbesondere Diethylentriamin, Trialkylentetramine und Tetraalkylenpentamine, wobei die Alkylenreste vorzugsweise Ethylenreste sind. Weiterhin können als Amine Dendrimere verwendet werden. Vorzugsweise weisen die Dendrimere die allgemeine Formel I auf

(R₂N-(CH₂)ₙ)₂N-(CH₂)ₓ-N((CH₂)ₙ-NR₂)₂ (I)

in der
R H oder -(CH₂)ₙ-NR¹₂ mit
R¹ H oder -(CH₂)ₙ-NR²₂ mit
R² H oder -(CH₂)ₙ-NR³₂ mit
R³ H oder -(CH₂)ₙ-NH₂ ist,
n einen ganzzahligen Wert von 2 bis 6 hat und
x einen ganzzahligen Wert von 2 bis 14 hat.

Vorzugsweise weist n einen ganzzahligen Wert von 3 oder 4, insbesondere 3 und x einen ganzzahligen Wert von 2 bis 6, vorzugsweise von 2 bis 4, insbesondere 2 auf. Die Reste R können auch unabhängig voneinander die angegebenen Bedeutungen haben. Vorzugsweise ist der Rest R ein Wasserstoffatom oder ein Rest -(CH₂)ₙ-NH₂.

Geeignete Carbonsäuren sind solche mit 3 bis 10 Carbonsäuregruppen, vorzugsweise 3 oder 4 Carbonsäuregruppen. Bevorzugte Carbonsäuren sind solche mit aromatischen und/oder heterocyclischen Kernen. Beispiele sind Benzyl-, Naphthyl-, Anthracen-, Biphenyl-, Triphenylreste oder Heterocyclen wie Pyridin, Bipyridin, Pyrrol, Indol, Furan, Thiophen, Purin, Chinolin, Phenanthren, Porphyrin, Phthalocyanin, Naphthalocyanin. Bevorzugt sind 3,5,3',5'Biphenyltetracarbonsäure-Phthalocyanin, Naphthalocyanin, 3,5,3',5'-Biphenyltetracarbonsäure, 1,3,5,7-Naphthalintetracarbonsäure, 2,4,6-Pyridintricarbonsäure, 3,5,3'5'-Bipyridyltetracarbonsäure, 3,5,3',5'-Benzophenontetracarbonsäure, 1,3,6,8-Akridintetracarbonsäure, besonders bevorzugt 1,3,5-Benzoltricarbonsäure (Trimesinsäure) und 1,2,4,5-Benzoltetracarbonsäure. Derartige Verbindungen sind technisch erhältlich oder können nach dem in der DE-A-4 312 182 beschriebenen Verfahren hergestellt werden. Bei der Verwendung von ortho-substituierten aromatischen Verbindungen wird vorzugsweise eine Imidbildung durch Wahl geeigneter Umsetzungstemperaturen verhindert.

Die Grundbausteine (b) sind mindestens trifunktionell, vorzugsweise mindestens tetrafunktionell. Dabei kann die Anzahl der funktionellen Gruppen 3 bis 16, vorzugsweise 4 bis 10, besonders bevorzugt 4 bis 8 betragen. Es werden in den erfindungsgemäßen Polyamiden entweder mindestens trifunktionelle Amine oder mindestens trifunktionelle Carbonsäuren eingesetzt, jedoch keine Gemische aus entsprechenden Aminen und Carbonsäuren. Geringe Mengen an mindestens trifunktionellen Aminen können jedoch in den trifunktionellen Carbonsäuren enthalten sein und umgekehrt.

Die Grundbausteine (b) liegen in einer Menge von 1 bis 50 µmol/g Polyamid, vorzugsweise 1 bis 35, besonders bevorzugt 1 bis 20 µmol/g Polyamid vor. Das Polyamid ist dabei das Polyamid, das die Komponenten (a) bis (d) enthält. Vorzugsweise sind die Grundbausteine (b) in einer Menge von 3 bis 150, besonders bevorzugt 5 bis 100, insbesondere 10 bis 70 µmol/g Polyamid an Äquivalenten enthalten. Die Äquivalente beziehen sich dabei auf die Anzahl der funktionellen Aminogruppen oder Carbonsäuregruppen.

Die difunktionellen Grundbausteine (c) sind difunktionelle Carbonsäuren oder difunktionelle Amine. Sie weisen somit 2 Carbonsäuregruppen auf, die mit Aminogruppen umgesetzt werden können oder 2 Aminogruppen, die mit Carbonsäuren umgesetzt werden können. Die difunktionellen Carbonsäuren oder Amine enthalten außer den Carbonsäuregruppen oder Aminogruppen keine weiteren funktionellen Gruppen, die mit Aminogruppen oder Carbonsäuregruppen reagieren können. Vorzugsweise enthalten Sie keine weiteren funktionellen Gruppen. Beispiele geeigneter difunktioneller Amine sind solche, die mit difunktionellen Carbonsäuren Salze bilden. Sie können linear aliphatisch sein, wie C₁₋₁₄-Alkylendiamin, vorzugsweise C₂₋₆-Alkylendiamin, beispielsweise Hexylendiamin. Sie können zudem cycloaliphatisch sein. Beispiele sind Isophorondiamin, Dicycycan, Laromin. Verzweigte aliphatische Diamine sind ebenfalls verwendbar, ein Beispiel ist Vestamin TMD (Trimethylhexamethylendiamin, hergestellt von der Hüls AG). Zudem können die Diamine aromatisch-aliphatisch sein, beispielsweise kann m-Xylylendiamin verwendet werden. Die genannten Amine können jeweils durch C₁₋₁₂-, vorzugsweise C₁₋₄-Alkylreste am Kohlenstoffgerüst substituiert sein.

Difunktionelle Carbonsäuren sind beispielsweise solche, die mit difunktionellen Diaminen Salze bilden. Es können lineare aliphatische Dicarbonsäuren sein, die vorzugsweise C₄₋₂₀-Dicarbonsäuren sind. Beispiele sind Adipinsäure, Azelainsäure, Sebazinsäure, Suberinsäure. Sie können zudem aromatisch sein. Beispiele sind Isophthalsäure, Terephthalsäure, Naphthalindicarbonsäure, wie auch dimerisierte Fettsäuren.

Monofunktionelle Grundbausteine (d) sind monofunktionelle Carbonsäuren oder Amine. Beispiele sind entsprechende wasserlösliche Amine oder Carbonsäuren, die aliphatisch, cycloaliphatisch oder aromatisch sein können. Beispiele sind niedere aliphatische Carbonsäuren oder Amine, Fettsäuren oder Fettamine und aromatische Amine, insbesondere C₂₋₂₄-Alkylcarbonsäuren, wie Propionsäure, Laurinsäure, 2-Ethylhexansäure, Perlargonsäure, wie auch Benzoesäure. Geeignete Amine sind beispielsweise Cyclohexylamin, C₂₋₂₄-Alkylamine, wie Tridecylamin. Als aromatisches Amin kann beispielsweise Benzylamin verwendet werden.

Die difunktionellen Grundbausteine (c) werden vorzugsweise in Mengen von 1 bis 55, besonders bevorzugt 1 bis 30, insbesondere 1 bis 15 µm/g Polymer eingesetzt. Die monofunktionellen Bausteine können in einer Menge von 5 bis 100, bevorzugt 5 bis 60 µm/g Polymer eingesetzt werden.

Sind die Grundbausteine (b) Carbonsäuren, so sind die Grundbausteine (c) und (d) Amine. Sind die Grundbausteine (b) Amine, so sind die Grundbausteine (c) und (d) Carbonsäuren. Grundbausteine (b) und Grundbausteine (c) und (d) haben somit immer gegensätzliche Funktionalitäten. Das Äquivalentverhältnis der funktionellen Gruppen von Grundbausteinen (b) zu der Summe der funktionellen Gruppen von Grundbausteinen (c) und (d) beträgt 60:40 bis 40:60, vorzugsweise 55:45 bis 45:55. Vorzugsweise ist das Äquivalentverhältnis in etwa ausgeglichen, d.h. es liegen etwa gleich viele funktionelle Gruppen in Grundbausteinen (b) wie in Grundbausteinen (c) und (d) vor. Die Summe der funktionellen Endgruppen der mono- und difunktionellen Grundbausteine entspricht somit in etwa der Summe der funktionellen Gruppen der mindestens trifunktionellen Grundbausteine.

Das Äquivalentverhältnis der funktionellen Gruppen von (c) zu den funktionellen Gruppen (d) beträgt 15:85 bis 60:40, vorzugsweise 20:80 bis 50:50, insbesondere 20:80 bis 30:70. Speziell bevorzugt ist ein Äquivalentverhältnis von etwa 20:80 bis 25:75. Das Äquivalentverhältnis bedeutet dabei das Verhältnis der Anzahl der jeweiligen funktionellen Gruppen zueinander. Durch die spezielle Auswahl der Grundbausteine (b), (c) und (d) sowie ihrer Mengen und Mengenverhältnisse wird ein definierter Verzweigungsgrad in den Polyamidmolekülen erreicht. Vorzugsweise liegen pro Polymerkette mehr als ein Verknüpfungspunkt vor, so daß die Moleküle H-Struktur aufweisen.

Besonders bevorzugt sind die nachstehenden Polyamide mit mindestens tetrafunktionellen Grundbausteinen (b). Dabei sind die Grundbausteine (b) solche der allgemeinen Formel (I)

(R₂N-(CH₂)ₙ)₂N-(CH₂)ₓ-N((CH₂)ₙ-NR₂)₂ **(I)**

in der
R H oder -(CH₂)ₙ-NR¹₂ mit
R¹ H oder -(CH₂)ₙ-NR²₂ mit
R² H oder -(CH₂)ₙ-NR³₂ mit
R³ H oder -(CH₂)ₙ-NH₂ ist,
n einen ganzzahligen Wert von 2 bis 6 hat und
x einen ganzzahligen Wert von 2 bis 14 hat.

Bevorzugt sind Moleküle in denen x = 2, n = 3, R = H oder -(CH₂)₃-NH₂. Dabei ist der Grundbaustein (c) eine aliphatische Dicarbonsäure, vorzugsweise Adipinsäure und der Grundbaustein (d) eine aliphatische Monocarbonsäure, insbesondere Propionsäure. Das Polyamid ist dabei vorzugsweise ansonsten aus ε-Caprolactam als Grundbaustein (a) aufgebaut. Die Grundbausteine (b) bis (d) können als Strukturregler bezeichnet werden, da sie die Ausbildung der in den Polyamiden vorliegenden Strukturen beeinflussen. Es liegen vorzugsweise keine weiteren Strukturregler vor, insbesondere keine solchen Strukturregler, die den Verzweigungsgrad der Polyamide einstellen.

Die erfindungsgemäßen Polyamide weisen eine mit der von linearen Polyamiden vergleichbare Nullviskosität bei einer sehr guten Fließfähigkeit auf. Die Schmelzviskosität im Bereich von 10³ bis 10⁵ s⁻¹ ist gering, so daß die Polyamide leicht verarbeitbar sind, insbesondere durch Extrudieren oder Spritzgießen. Die erfindungsgemäßen Polyamide weisen sehr gute mechanische Eigenschaften auf, die sie für eine Vielzahl von Anwendungen einsetzbar machen.

Die erfindungsgemäßen Polyamide weisen eine sehr hohe Schmelzestabilität auf. Als schmelzestabil werden dabei Polyamide bezeichnet, bei denen sich nach Trocknung die Nullviskosität, die rheologisch durch oszillatorische Scherung bestimmt werden kann, nach 10 Minuten bei 280°C unter Schutzgasatmosphäre um maximal 10 % erhöht. Dabei werden die Polyamide zunächst 4 Tage bei 80°C getrocknet, um einen Einfluß von Wasser auf das erhaltene Ergebnis auszuschließen. Schmelzestabile Polyamide können insbesondere in thermischen Verformungsverfahren eingesetzt werden, da sie unter Wärmebelastung keine oder nur eine geringe Änderung der Viskosität zeigen.

Die Art der Herstellung der erfindungsgemäßen Polyamide kann frei gewählt werden. Es können alle Grundbausteine (a) bis (d) gemeinsam umgesetzt werden zum erfindungsgemäßen Polyamid, es können Präpolymere der Grundbausteine (a) bis (d) hergestellt werden, die anschließend bis zum gewünschten Molekulargewicht beziehungsweise bis zur gewünschten Viskosität weiter umgesetzt werden, es können Grundbausteine (a) zu einem Präpolymer umgesetzt werden, das sodann mit den Grundbaustein (b) bis (d) umgesetzt wird oder die Grundbausteine (b) bis (d) können in ein fertiges Polymer der Grundbausteine (a) eingearbeitet werden. Dies kann beispielsweise über einen Extruder erfolgen.

Die Erfindung betrifft auch ein Verfahren zur Herstellung der vorstehend genannten Polyamide durch Umsetzung der Grundbausteine (a), (b), (c) und (d) bei einer Temperatur von 250 bis 300°C und, vorzugsweise 260 bis 280 °C, insbesondere 250 bis 270°C und einem Druck von 1 bis 40 bar, vorzugsweise 1 bis 30 bar, insbesondere 1 bis 20 bar in Gegenwart von Wasserdampf. Der Druck ist dabei hauptsächlich der Wasserdampfdruck. Die Umsetzung ist eine Polykondensation bei Verwendung von Aminocarbonsäuren als Grundbausteine (a) und eine Polyaddition bei Verwendung von Lactamen als Grundbausteine (a). Die Grundbausteine (b) bis (d) werden durch Polykondensation in das Polymergerüst eingebaut. Die Umsetzung kann auch als hydrolytische Polymerisation beschrieben werden.

Die Grundbausteine werden dabei vorzugsweise vor der Umsetzung gut durchmischt.

Die Grundbausteine (a) können direkt mit den anderen Grundbausteinen (b) bis (d) umgesetzt werden, es können jedoch auch vorpolymerisierte Grundbausteine (a) in Form eines Präpolymerisates eingesetzt werden. Hierbei werden die Grundbausteine (a) vollständig oder teilweise zu einem Präpolymerisat umgesetzt und das Präpolymerisat mit den Grundbausteinen (b), (c) und (d) umgesetzt. Bei der Umsetzung handelt es sich um eine Gleichgewichtsreaktion, so daß auch bei vollständig zu einem Präpolymerisat umgesetzten Grundbausteinen (a) durch Zusatz der Grundbausteine (b) bis (d) ein erfindungsgemäßes Polyamid mit H-Struktur erhalten wird.

Die Umsetzung kann diskontinuierlich oder kontinuierlich durchgeführt werden. Bei diskontinuierlicher Durchführung wird die Umsetzung vorzugsweise in einem Autoklaven stattfinden. Bei der bevorzugten kontinuierlichen Umsetzung werden die Grundbausteine (a) bis (d) vorzugsweise vorgemischt und kontinuierlich in einem VK-Rohr bis zu einer niedrigen Viskosität polymerisiert. VK-Rohre sind in Vieweg, Müller; Polyamide, Hauser-Verlag 1966, S. 190 ff beschrieben. Sodann werden die erhaltenen Produkte mit niedriger Viskosität kontinuierlich bis zum Erhalt des gewünschten Molekulargewichts beziehungsweise der gewünschten Viskosität getempert. Vorzugsweise beträgt die Viskosität der erfindungsgemäßen Polyamide 80 bis 350 ml/g, besonders bevorzugt 120 bis 280 ml/g. Dabei wird die Viskositätzahl gemäß ISO 1628 an einer 0,5 Gew.-%igen Lösung in konzentrierter Schwefelsäure bei 23°C bestimmt.

Die erhaltenenen Endprodukte werden kontinuierlich mit Wasser extrahiert. Bei der Herstellung von Polyamid-Präpolymeren werden sie vorzugsweise bis zu einer Viskositätszahl von 40 bis 80 ml/g polymerisiert. Die Herstellung kann beispielsweise nach den in EP-A-0 129 195 und EP-A-0 129 196 beschriebenen Verfahren erfolgen. Gemäß diesen Verfahren wird eine wäßrige Lösung der Monomeren unter erhöhtem Druck und unter gleichzeitiger Verdampfung von Wasser und Bildung eines Präpolymeren auf eine Temperatur von 250 bis 300°C erhitzt, anschließend werden Präpolymere und Dampf kontinuierlich getrennt, und der Dampf zurückgeführt. Schließlich wird das Präpolymer in eine Polykondensationszone geleitet und unter einem Überdruck von 1 bis 10 bar und einer Temperatur von 250 bis 300°C polykondensiert. Die Monomerenlösung wird dabei bei einem Überdruck von 1 bis 10 bar innerhalb einer Verweilzeit von weniger als 60 Sek. erhitzt, wobei beim Austritt aus der Verdampferzone der Umsetzungsgrad bevorzugt mindestens 93 % und der Wassergehalt des Präpolymeren höchstens 7 Gew.-% betragen. Die verwendeten wäßrigen Lösungen haben dabei in der Regel einen Monomergehalt von 30 bis 70 Gew.%, insbesondere 40 bis 65 Gew.-%.

Bevorzugt wird die wäßrige Monomerenlösung mit einer Temperatur von 50 bis 100°C kontinuierlich in eine Verdampferzone geleitet, wo sie unter einem Überdruck von 1 bis 10, vorzugsweise 2 bis 6 bar auf eine Temperatur von 250 bis 300°C erhitzt wird. Die Verweilzeit beträgt vorzugsweise 10 bis 55, insbesondere 10 bis 40 Sekunden. Der Umsatz beträgt vorzugsweise 95 bis 98 %, der Wassergehalt vorzugsweise 2 bis 5, insbesondere 1 bis 3 Gew.-%. Die Verdampferzone ist dabei bevorzugt als Röhrenbündel ausgebildet. Besonders bevorzugt sind Röhrenbündel, in denen der Querschnitt der einzelnen Röhren periodisch wiederkehrend rohrförmig oder spaltförmig ausgebildet ist. Es kann vorteilhaft sein, das Gemisch aus Präpolymer und Dampf vor der Trennung der Phasen unmittelbar nach der Verdampferzone durch eine röhrenförmige Stoffaustauschzone, die mit Einbauten versehen ist, zu leiten. Hierbei hält man die in der Verdampferzone angewandten Temperaturen und Druckbedingungen ein. Die Einbauten, wie Füllkörper, wie Raschigringe, Metallringe oder insbesondere Füllkörper aus Drahtnetz, bewirken eine große Oberfläche. Hierdurch werden die Phasen, d.h. Präpolymere und Dampf innig in Berührung gebracht. In der Regel hält man in der Stoffaustauschzone eine Verweilzeit von 1 bis 15 Minuten ein.

Das aus der Verdampferzone beziehungsweise Stoffaustauschzone austretende zweiphasige Gemisch aus Dampf und Präpolymeren wird getrennt. Die Trennung erfolgt dabei in der Regel von selbst. Die erhaltenen Präpolymeren werden in eine Polymerisationszone geleitet, wo die Umsetzung bei einer Temperatur von 250 bis 300, besonders bevorzugt 260 bis 280°C unter einem Überdruck von 1 bis 10, besonders bevorzugt 2 bis 6 bar stattfindet. Vorzugsweise beträgt die Verweilzeit 5 bis 30 Minuten. Vorzugsweise weist das so erhaltene Polyamidpräpolymer eine Viskositätszahl von 40 bis 80 ml/g, besonders bevorzugt 50 bis 75 ml/g auf.

Die so erhaltenen Präpolymere können schmelzflüssig durch eine Austragszone unter gleichzeitiger Entfernung des in der Schmelze enthaltenen Restwassers geführt werden. Geeignete Austragszonen sind Entgasungsextruder. Die vom Wasser befreite Schmelze kann in Stränge gegossen und granuliert werden und in einem Extruder, vorzugsweise Doppelschneckenextruder mit den Grundbausteinen (b) bis (d) gemischt und aufgeschmolzen werden. Das erfindungsgemäße Polyamid wird dabei als Strang ausgetragen, gekühlt und granuliert. Die Grundbausteine (b) bis (d) können auch schon in den Entgasungsextruder gegeben werden. Dabei kann der Entgasungsextruder mit geeigneten Mischelementen, wie Knetern ausgestattet sein. Das erhaltene Granulat kann in fester Phase unter Inertgas kontinuierlich oder diskontinuierlich bei einer Temperatur unterhalb des Schmelzpunktes, beispielsweise von 170 bis 240°C, bis zur gewünschten Viskosität umgesetzt beziehungsweise kondensiert werden. Es können beispielsweise Taumeltrockner oder bei der kontinuierlichen Umsetzung mit heißem Inertgas durchströmte Temperrohre verwendet werden. Bevorzugt ist die kontinuierliche Festphasenumsetzung, wobei als Inertgas Stickstoff oder insbesondere überhitzter Wasserdampf verwendet werden.

Die erfindungsgemäßen Polyamide können zur Herstellung von Formmassen oder Formkörpern verwendet werden. Somit betrifft die Erfindung auch Formmassen, die vorstehend beschriebenen erfindungsgemäßen Polyamide enthalten.

Die erfindungsgemäßen Formmassen können dabei weitere für Polyamide übliche Zusatzstoffe und Verarbeitungshilfsmittel, wie Stabilisatoren, Oxidationsverzögerer, Wärmestabilisatoren, UV-Stabilisatoren, Entformungsmittel, Färbemittel, wie Farbstoffe und Pigmente, faser- und pulverförmige Füll- und Verstärkungsmittel, Nukleierungsmittel, Weichmacher u.s.w. enthalten. Der Anteil in den Formmassen beträgt in der Regel nicht mehr als 80, vorzugsweise nicht mehr als 50 Gew.-%.

Beispiele für Oxidationsverzögerer und Wärmestabilisatoren sind Salze von Metallen der Nebengruppen, wie Kupfer(I)halogenide, insbesondere Chloride, Bromide oder Iodide, gegebenenfalls in Verbindung mit Salzen von Metallen der Gruppe I des Periodensystems der Elemente, wie Natrium-, Kalium- und/oder Lithiumhalogeniden. Es können auch sterisch gehinderte Phenole, Hydrochinone, aromatische sekundäre Amine, wie Diphenylamine, verschiedene substituierte Vertreter dieser Gruppen und deren Gemische in Konzentrationen von bis zu 1 Gew.-%, bezogen auf das Gesamtgewicht der Formmasse verwendet werden.

UV-Stabilisatoren sind beispielsweise substituierte Resorcine, Salicylate, Benzotriazole und Benzophenone. Organische Farbstoffe sind beispielsweise Nigrosin. Pigmente sind beispielsweise Titandioxid, Cadmiumsulfid, Cadmiumselenid, Phthalocyanine, Ultramarinblau und Ruß. Beispiele für Füllstoffe und Verstärkungsmittel sind Kohlenstoffasern, Glasfasern, amorphe Kieselsäure, Asbest, Calciumsilikat, Wollastonit, Alluminiumsilikat, Magnesiumcarbonat, Kaolin, Kreide, gepulverter Quarz, Glimmer und Feldspat. Der Anteil an Füll- und Farbstoffen beträgt im allgemeinen bis zu 50, vorzugsweise 20 bis 35 Gew.-%, bezogen auf das Gesamtgewicht der Formmasse.

Als Keimbildungsmittel können beispielsweise Talkum, Calciumfluorid, Natriumphenylphosphinat, Aluminiumoxid und feinteiliges Polytetrafluorethylen eingesetzt werden.

Beispiele für Weichmacher sind Phthalsäuredioctylester, Phthalsäuredibenzylester, Phthalsäurebutylbenzylester, Kohlenwasserstofföle, N-(n-butyl)benzolsulfonamid und o- und p-Toluolethylsulfonamid.

Des weiteren können alle üblichen Flammschutzmittel wie Halogenverbindungen, Metallhydroxide, Phosphorverbindungen, beziehungsweise roter Phosphor selbst, zugesetzt werden.

Aus den erfindungsgemäßen Formmassen beziehungsweise Polyamiden können beliebige Formkörper nach bekannten Verfahren, wie z.B. Spritzgießen, Extrusion, Extrusionsblasformen hergestellt werden. Die Erfindung betrifft somit auch Formkörper aus den beschriebenen Formmassen und Polyamiden. Zusätzlich können die beschriebenen Polyamide bei der Faserherstellung verwendet werden.

Die Erfindung wird nachstehend durch Beispiele erläutert.

### Herstellung der Polyamide:

Die Herstellung der erfindungsgemäßen Polyamide erfolgte in einem Rührautoklaven durch Dosierung der in der Tabelle 1 aufgeführten Grundbausteine in einer ε-Caprolactam-Zubereitung, die nach dem vorstehend beschriebenen diskontinuierlichen Verfahren polymerisiert wurde.

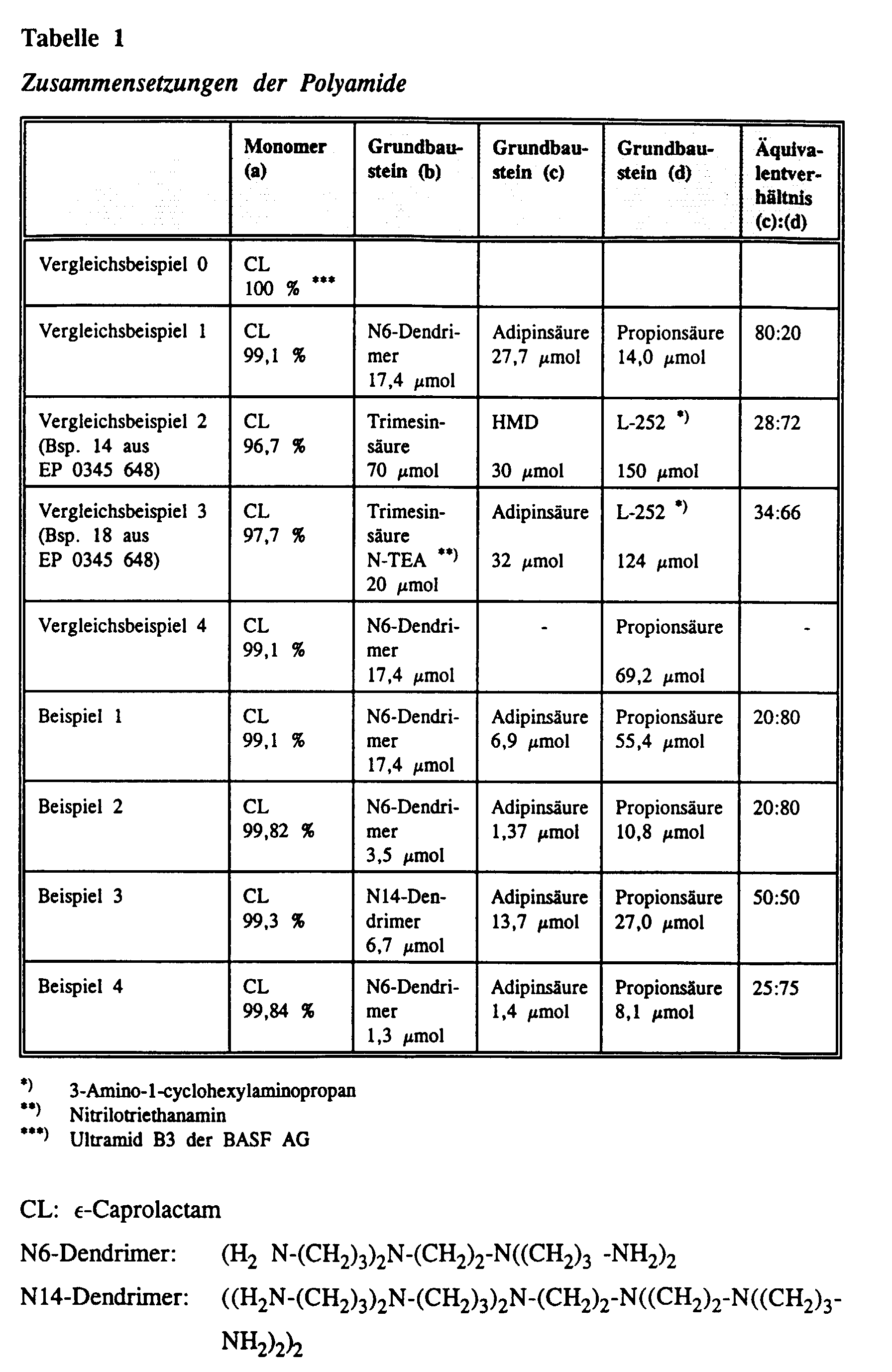

Zur Bestimmung der Fließfähigkeit wurden die Nullviskosität und Schmelzviskosität der Polyamide untersucht. Die Nullviskosität wurde dabei bestimmt nach ISO 1628, die Schmelzviskosität durch oszillatorische Scherung bei 250°C.

Die Ergebnisse sind in der nachstehenden Tabelle 2 zusammengefaßt.

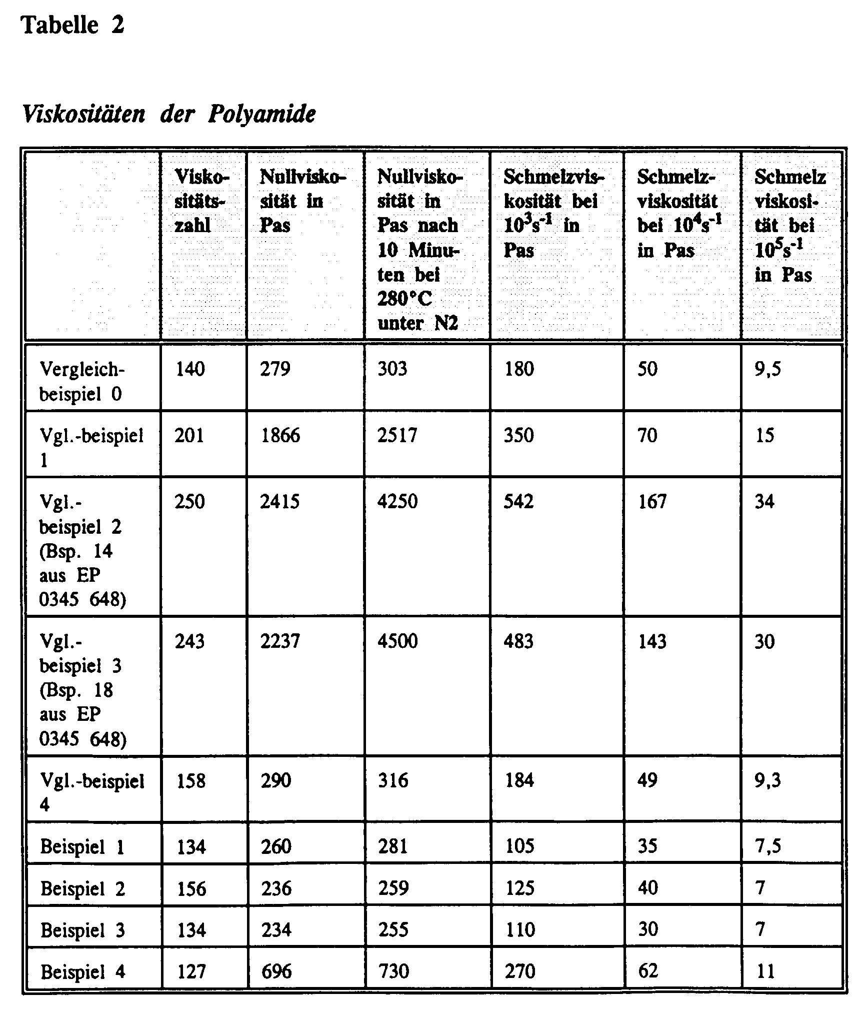

Die Schmelzestabilität wurde durch eine Messung Nullviskosität nach einer Probenlagerung im Rheometer bei 280°C 10 Minuten gemessen. Zur Ermittlung der Schmelzviskosität wurden Fließkurven bei 250°C bestimmt an einem Kapillarrheometer HKV (Hochdruck) der Firma Göttfert beziehungsweise in einem Stickstoff-Kapillarviskosimeter AVM.

Die verwendeten Düsengeometrien waren:
HKV: L/R=60; R=0,50 mm, Bereich 576 bis 11500 s⁻¹ L/R=60; R=0,25 mm, Bereich 1843 bis 92160 s⁻¹ AVM: L/R=50; R=0,60 mm, Bereich 40 bis 1500 s⁻¹

Aus den Ergebnissen der Tabelle 2 geht hervor, daß die erfindungsgemäßen Polyamide eine gegenüber linearen Polyamiden sehr niedrige Schmelzviskosität unter Scherung aufweisen.Sie sind somit sehr gut fließfähig. Auch die Nullviskositäten nach Probenlagerung bei 280°C für 10 Minuten sind sehr gering, d.h. die Schmelzen sind sehr stabil.

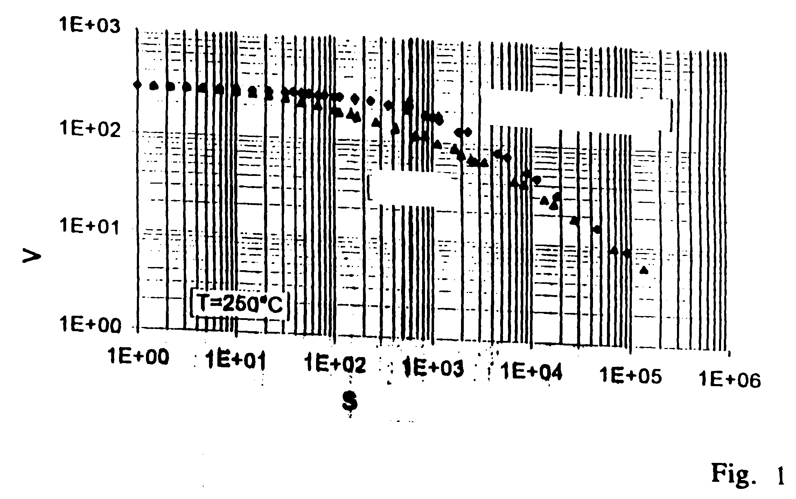

In der Zeichnung sind in
Fig. 1 Fließkurven von Polyamiden dargestellt. Die Viskosität V (in Pas) ist gegen die Scherrate S (in 1/s) aufgetragen.
Die Fließkurven für die Polyamide aus Vergleichsbeispiel 1 und Beispiel 1 sind in der anliegenden Figur 1 dargestellt. Aus der Figur 1 geht hervor, daß die Polyamide gemäß Beispiel 1 eine deutlich niedrigere Viskosität im Bereich von 10¹ bis 10⁵ s⁻¹ als Scherrate aufweisen im Vergleich zu den Vergleichspolyamiden.

Die mechanischen Eigenschaften der Polyamide sind in der nachstehenden Tabelle 3 aufgeführt. Es wurde die Kerbschlagzähigkeit nach Charpy nach ISO 179/leA (Messung nach Trocknung) sowie der Zug-E-Modul, die Streckspannung und die Streckdehnung nach ISO 527 (Messung nach Trocknung) bestimmt.

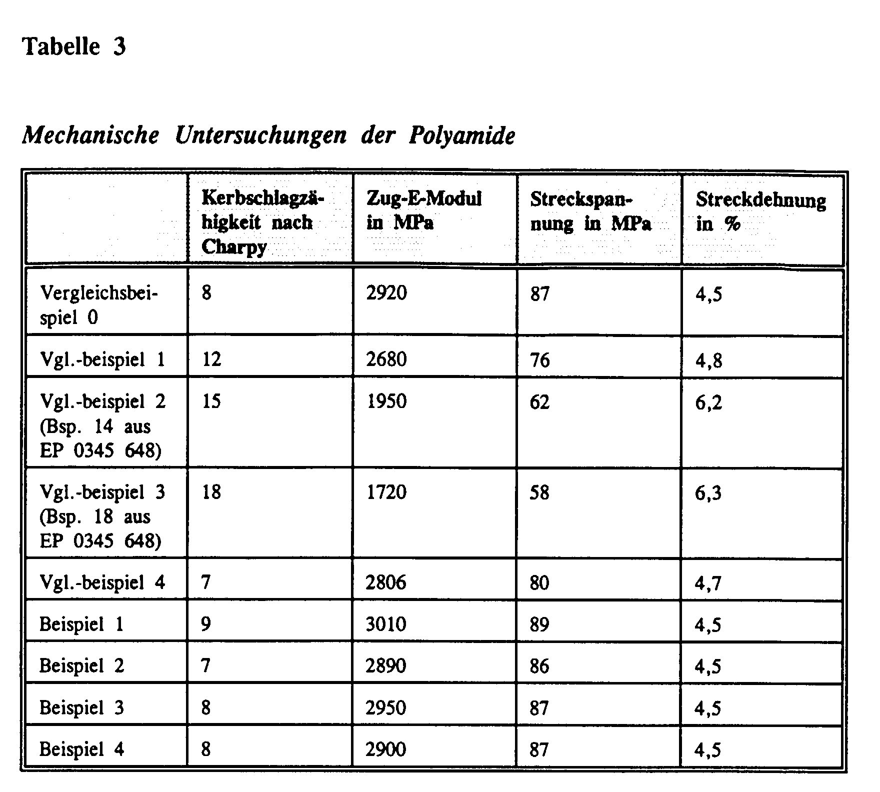

Aus den Ergebnissen der Tabelle 3 geht hervor, daß die erfindungsgemäßen Polyamide ebenso gute mechanische Eigenschaften aufweisen wie die Vergleichspolyamide.

## Patentansprüche

1. Polyamide aus
Lactamen, Aminocarbonsäuren oder deren Gemischen als Grundbausteine (a),
1 bis 50 µmol/g Polyamid an mindestens trifunktionellen Aminen oder Carbonsäuren als Grundbausteine (b),
difunktionellen Carbonsäuren oder Aminen als Grundbausteine (c) und
monofunktionellen Carbonsäuren oder Aminen als Grundbausteine (d),
wobei (c) und (d) Carbonsäuren sind, wenn (b) Amine sind und (c) und (d) Amine sind, wenn (b) Carbonsäuren sind,
das Äquivalentverhältnis der funktionellen Gruppen von (b) zu den funktionellen Gruppen von (c) und (d) zusammen 60:40 bis 40:60 beträgt und
das Äquivalentverhältnis der funktionellen Gruppen von (c) zu den funktionellen Gruppen von (d) 15:85 bis 60:40 beträgt.

2. Polyamide nach Anspruch 1, wobei die Grundbausteine (b) mindestens tetrafunktionell sind.

3. Polyamide nach Anspruch 2, wobei die Grundbausteine (b) die allgemeine Formel I
(R₂N-(CH₂)ₙ)₂N-(CH₂)ₓ-N((CH₂)ₙ-NR₂)₂ **(I)**
in der
R H oder -(CH₂)ₙ-NR¹₂ mit
R¹ H oder -(CH₂)ₙ-NR²₂ mit
R² H oder -(CH₂)ₙ-NR³₂ mit
R³ H oder -(CH₂)ₙ-NH₂ ist,
n einen ganzzahligen Wert von 3 bis 6 hat und
x einen ganzzahligen Wert von 2 bis 14 hat, aufweisen.

4. Verfahren zur Herstellung von Polyamiden nach einem der Ansprüche 1 bis 3 durch Umsetzung der Grundbausteine (a), (b), (c) und (d) bei einer Temperatur von 250 bis 300°C und einem Druck von 1 bis 40 bar in Gegenwart von Wasserdampf.

5. Verfahren nach Anspruch 4, wobei die Grundbausteine (a) vollständig oder teilweise zu einem Präpolymerisat umgesetzt werden und das Präpolymerisat mit den Grundbausteinen (b), (c) und (d) umgesetzt wird.

6. Verfahren nach Anspruch 4 oder 5, wobei die Umsetzung kontinuierlich durchgeführt wird.

7. Verwendung von Polyamiden gemäß einem der Ansprüche 1 bis 3 zur Herstellung von Fasern, Formmassen oder Formkörpern.

8. Formmasse, enthaltend Polyamide nach einem der Ansprüche 1 bis 3.

9. Formkörper oder Fasern aus Formmassen nach Anspruch 8.

10. Verfahren zur Herstellung von Formkörpern gemäß Anspruch 9 durch Spritzgießen, Extrusionsblasformen, Extrusion oder von Fasern durch Faserspinnen einer Formmasse nach Anspruch 8.

## Claims

1. A polyamide made from,
as fundamental builfing blocks (a), lactams or aminocarboxylic acids or mixtures of these,
as fundamental building blocks (b), from 1 to 50 µmol of at least tribasic amines or carboxylic acids per gram of polyamide,
as fundamental building blocks (c), dibasic carboxylic acids or amines and
as fundamental building blocks (d), monobasic carboxylic acids or amines,
where (c) and (d) are carboxylic acids if (b) are amines, and (c) and (d) are amines if (b) are carboxylic acids,
the equivalents ratio of the functional groups of (b) to the functional groups of (c) and (d) together is from 60:40 to 40:60 and
the equivalents ratio of the functional groups of (c) to the functional groups of (d) is from 15:85 to 60:40.

2. A polyamide as claimed in claim 1, where the fundamental building blocks (b) are at least tetrafunctional.

3. A polyamide as claimed in claim 2, where the fundamental building blocks (b) have the formula I
(R₂N-(CH₂)ₙ)₂N-(CH₂)ₓ-N((CH₂)ₙ-NR₂)₂ (I)
where
R is H or -(CH₂)ₙ-NR¹₂ where
R¹ is H or -(CH₂)ₙ-NR²₂ where
R² is H or -(CH₂)ₙ-NR³₂ where
R³ is H or -(CH₂)ₙ-NH₂,
n is an integer from 3 to 6 and
x is an integer from 2 to 14.

4. A process for preparing polyamides as claimed in any of claims 1 to 3 by reacting the fundamental building blocks (a), (b), (c) and (d) at from 250 to 300°C and at a pressure of from 1 to 40 bar in the presence of steam.

5. A process as claimed in claim 4, where the fundamental building blocks (a) are converted completely or partially to a prepolymer, and the prepolymer is reacted with the fundamental building blocks (b), (c) and (d).

6. A process as claimed in claim 4 or 5, where the reaction is carried out continuously.

7. Use of a polyamide as claimed in any of claims 1 to 3 for producing fibers, molding compositions or shaped articles.

8. A molding composition comprising polyamides as claimed in any of claims 1 to 3.

9. A shaped article or a fiber made from a molding composition as claimed in claim 8.

10. A process for the production of shaped articles as claimed in claim 9, by injection molding, extrusion blow-forming or extrusion or of fibers by fiber-spinning of a molding composition as claimed in claim 8.

## Revendications

1. Polyamides à base de
lactames, d'acides aminocarboxyliques ou de leurs mélanges en tant qu'élément structurel de base (a),
1 à 50 µmol par g de polyamide, d'amines ou d'acides carboxyliques au moins trifonctionnels en tant qu'élément structurel de base (b),
des acides carboxyliques ou des amines bifonctionnels en tant qu'élément structurel de base (c) et
des acides carboxyliques ou des amines monofonctionnels tant qu'élément structurel de base (d),
où (c) et (d) sont des acides carboxyliques lorsque (b) sont des amines et (c) et (d) sont des amines lorsque (b) sont des acides carboxyliques,
le rapport en équivalent des groupements fonctionnels de (b) aux groupements fonctionnels de (c) et (d) ensemble s'élève de 60:40 à 40:60 et
le rapport en équivalent des groupements fonctionnels de (c) aux groupements fonctionnels de (d) s'élève de 15:85 à 60:40.

2. Polyamides selon la revendication 1, dans lesquels les éléments structurels de base (b) sont au moins tétrafonctionnels.

3. Polyamides selon la revendication 2, dans lesquels les éléments structurels de base (b) présente la formule générale I
(R₂N-(CH₂)ₙ)₂N-(CH₂)ₓ-N((CH₂)ₙ-NR₂)₂ **(I)**
dans laquelle
R représente H ou -(CH₂)ₙ-NR¹₂ avec
R¹ représentant H ou -(CH₂)ₙ-NR²₂ avec
R² représentant H ou -(CH₂)ₙ-NR³₂ avec
R³ représentant H ou -(CH₂)ₙ-NH₂,
n est un nombre entier de 3 à 6 et
x est un nombre entier de 2 à 14.

4. Procédé de préparation de polyamides selon l'une quelconque des revendications 1 à 3, par réaction des éléments structurels de base (a), (b), (c) et (d) à une température de 250 à 300°C et sous une pression de 1 à 40 bar en présence de vapeur d'eau.

5. Procédé selon la revendication 4, dans lequel on fait réagir les éléments structurels (a) de façon partielle ou totale en un prépolymère et l'on fait réagir le prépolymère avec les éléments structurels (b), (c) et (d).

6. Procédé selon la revendication 4 ou 5, dans lequel la réaction est effectuée de façon continue.

7. Utilisation de polyamides selon l'une quelconque des revendications 1 à 3 pour la préparation de fibres, de masses à mouler ou de corps moulés.

8. Masses à mouler contenant des polyamides selon l'une quelconque des revendications 1 à 3.

9. Corps moulés ou fibres à base de masses à mouler selon la revendication 8.

10. Procédé de préparation de corps moulés selon la revendication 9 par moulage par injection, moulage par extrusion/soufflage, extrusion, ou de fibres par filage de fibres d'une masse à mouler selon la revendication 8.
